# EUROPÄISCHE PATENTSCHRIFT

(11) **EP 2 414 862 B1**
(45) Veröffentlichungstag und Bekanntmachung des Hinweises auf die Patenterteilung: **26.06.2013**
(21) Anmeldenummer: 10704815.9
(22) Anmeldetag: 17.02.2010
(51) Int. Cl.: G01S 7/03, G01S 13/93

(54) **MEHRSTRAHLRADARSENSORVORRICHTUNG UND VERFAHREN ZUM BESTIMMEN EINES ABSTANDES**
MULTIBEAM RADAR SENSOR APPARATUS AND METHOD FOR DETERMINING A DISTANCE
DISPOSITIF DE DÉTECTION RADAR MULTIFAISCEAUX ET PROCÉDÉ DE DÉTERMINATION D'UNE DISTANCE

(30) Priorität: 01.04.2009 DE 102009002082
(43) Veröffentlichungstag der Anmeldung: 08.02.2012
(73) Patentinhaber: Robert Bosch GmbH, 70442 Stuttgart (DE)
(72) Erfinder: KLAR, Michael, 71106 Magstadt (DE); BINZER, Thomas, 70565 Stuttgart (DE); MIOSGA, Klaus-Dieter, 71522 Backnang (DE); BRUEGGEMANN, Oliver, 75248 Oelbronn-Duerrn (DE); GROSS, Volker, 71254 Ditzingen (DE); HAUK, Joachim, 71272 Renningen-Malmsheim (DE); STEINBUCH, Dirk, 71299 Wimsheim (DE); KUEHNLE, Goetz, 71282 Hemmingen (DE); SEIZ, Juergen, 73642 Welzheim (DE)
(86) Internationale Anmeldenummer: PCT/EP2010/051950
(87) Internationale Veröffentlichungsnummer: WO 2010/112261

(56) Entgegenhaltungen:
- WO-A1-2006/010662
- DE-A1- 19 719 953
- DE-A1-102005 062 772
- DE-A1-102007 035 026
- DE-A1-102007 046 480
- US-A1- 2003 179 129

## Beschreibung

Die Erfindung betrifft eine Mehrstrahlradarsensorvorrichtung mit zumindest zwei Sende-/Empfangskanälen, deren Signalpfade jeweils eine Antenne und einen Mischer enthalten, wobei zumindest ein erster Mischer bidirektional als Transfermischer ausgebildet ist. Weiterhin betrifft die Erfindung ein Verfahren zum Bestimmen eines Abstandes und/oder einer Geschwindigkeit eines Zieles mittels einer Mehrstrahlradarsensorvorrichtung, bei welchem ein Radarsignal in Richtung des Zieles gesendet und ein reflektiertes Radarecho empfangen wird, wozu zumindest zwei Sende-/Empfangskanäle verwendet werden, deren Signalpfade jeweils eine Antenne und einen Mischer enthalten, wobei zumindest ein erster Mischer bidirektional als Transfermischer und die zugeordnete Antenne sowohl als Sende- als auch als Empfangsantenne betrieben wird.

### Stand der Technik

Derartige Mehrstrahlradarsensorvorrichtungen werden beispielsweise in Abstandswarnsystemen oder Abstandsregelsystemen von Kraftfahrzeugen eingesetzt. Beispielsweise kann unter Verwendung einer Mehrstrahlradarsensorvorrichtung der eingangs genannten Art ein adaptives Geschwindigkeitsregelsystem realisiert werden, welches die Fahrzeuggeschwindigkeit in Abhängigkeit der Geschwindigkeit übriger Verkehrsteilnehmer regelt.

Zur Erhöhung der räumlichen Auflösung der Mehrstrahlradarsensorvorrichtung ist aus der DE 10 2004 044 130 A1 bekannt, eine Mehrzahl parallel angeordneter Antennen zu verwenden, welche jeweils einen Radarstrahl bzw. eine Radarstrahlkeule aussenden bzw. empfangen. Das Aussenden und der Empfang des reflektierten Radarsignals erfolgt dabei durch ein und dieselbe Antenne. Zusätzlich können weitere Antennen vorgesehen sein, deren Sendeleistung abgesenkt ist bzw. deren Sendeleistung ganz entfällt. Diese reinen Empfangsantennen werden üblicherweise an den Randbereichen einer Mehrstrahlradarsensorvorrichtung angeordnet, um schmälere innere Radarstrahlkeulen zu erzielen. Dadurch wird die Winkelauflösung weiter verbessert und die Nebenspurstörung reduziert.

Die genannten Maßnahmen können jedoch nicht verhindern, dass Ziele mit großem Rückstreuquerschnitt auch in einem Winkelbereich delektiert werden, der außerhalb des Sichtbereiches des Sensors liegt. Somit wird das Abstandswarn- und/oder -regelsystem im Kraftfahrzeug auch von Objekten beeinflusst, welche beispielsweise auf einer benachbarten Fahrspur gefahrlos passiert werden könnten. Weiterhin reicht die Winkelauflösung der bekannten Mehrstrahlradarsensorvorrichtungen oftmals nicht aus, um Fehlechos, welche durch Reflektionen an Gebäuden oder Fahrbahnbegrenzungen auftreten, eindeutig als solche zu identifizieren und zu unterdrücken. Dadurch werden oftmals einzelne Objekte mehrfach unter unterschiedlichen Sichtwinkeln nachgewiesen. Auch dies führt zu Fehlsignalen bei der Abstandswamung bzw. zu unerwünschten Reaktionen eines Abstandsregelsystemes.

Die DE 10 2007 046 480 A1 beschreibt ein Radarsystem zur Entfernungsmessung in zwei unterschiedlichen Entfernungsbereichen. Hierzu umfasst das Radarsystem unter Anderem eine Mischeranordnung, die von einem kombinierten Sende-/Empfangsbetrieb in einen reinen Empfangsbetrieb umschaltbar ist. Die WO 2006/010662 A1 beschreibt ein Verfahren zum Betreiben einer Radarvorrichtung, bei dem zur Plausibilisierung direkt gemessene Objektreflexionen mit indirekten Objektreflexionen verglichen werden. Die US 2003/0179129 A1 beschreibt ein Radarsystem, bei dem Geisterbilder durch Vergleich von Entfernung und Geschwindigkeit mit bereits detektierten Objekten erkannt werden.

Ausgehend von diesem Stand der Technik liegt der Erfindung daher die Aufgabe zugrunde, die Detektion von Zielen außerhalb eines vorgebbaren Winkelbereiches zu verhindern. Weiterhin besteht die Aufgabe der Erfindung darin, bei der Detektion von Mehrfachechos eines einzelnen Zieles die Position des Zieles eindeutig zu bestimmen.

### Offenbarung der Erfindung

Die Aufgabe wird erfindungsgemäß gelöst durch eine Mehrstrahlradarsensorvorrichtung mit zumindest zwei Sende-/Empfangskanälen, deren Signalpfade jeweils eine Antenne und einen Mischer enthalten, wobei zumindest ein erster Mischer bidirektional als Transfermischer ausgebildet ist und zumindest ein zweiter Mischer von einem ersten in einen zweiten Betriebszustand umschaltbar ist, wobei der Mischer im ersten Betriebszustand bidirektional als Trsnsfermischer und im zweiten Betriebszustand zumindest annähernd isolierend als Empfangsmischer ausgebildet ist

Weiterhin besteht die Lösung der Aufgabe in einem Verfahren zum Bestimmen eines Abstandes und/oder einer Geschwindigkeit eines Zieles mittels einer Mehrstrahlradarsensorvorrichtung, bei welchem ein Radarsignal in Richtung eines Zieles gesendet und ein reflektiertes Radarecho empfangen wird, wozu zumindest zwei Sende-/ Empfangskanäle verwendet werden, deren Signalpfade jeweils eine Antenne und einen Mischer enthalten, wobei zumindest ein erster Mischer bidirektional als Transfermischer betrieben wird und die zugeordnete Antenne sowohl als Sende- als auch als Empfangsantenne verwendet wird und zumindest ein zweiter Mischer von einem ersten in einen zweiten Betriebszustand umgeschaltet wird, um den Mischer im ersten Betriebszustand bidirektional als Transfermischer und die zugeordnete Antennen sowohl als Sende- als auch als Empfangsantenne zu verwenden und den Mischer im zweiten Betriebszustand zumindest annähernd isolierend als Empfangsmischer und die zugeordnete Antenne im wesentlichen als Empfangsantenne zu verwenden.

Erfindungsgemäß wird vorgeschlagen, eine Mehrstrahlradarsensorvorrichtung dadurch zu realisieren, dass eine Mehrzahl von Antennen in einer festen geometrischen Beziehung zueinander angeordnet wird. Bei der Festlegung der Anzahl der verwendeten Antennen wird der Fachmann insbesondere die mit der größeren Anzahl von Antennen steigende Auflösung gegenüber dem beanspruchten Bauraum und dem steigenden Schaltungsaufwand abwägen. Insbesondere wird die Anzahl der Antennen oftmals zwei bis zehn betragen. Besonders bevorzugt ist die Verwendung von drei oder vier Antennen.

Zumindest eine dieser Antennen wird erfindungsgemäß stets als Sende- und Empfangsantenne verwendet. Dazu wird jede dieser Antennen über je einen Transfermischer mit dem Hochfrequenzsignal eines Lokaloszilliators verbunden. Der Transfermischer dient dabei dazu, das vom Lokaloszilliator erzeugte Signal zur Antenne weiterzuleiten und zugleich das von der Antenne empfangene Signal mit dem Signal des Lokaloszilliators zu mischen. Das Mischprodukt stellt dann ein Zwischenfrequenzsignal dar, dessen Frequenz die Dopplerverschiebung des empfangenen Signals angibt. Auf diese Weise kann die Relativgeschwindigkeit des Ziels und über die Laufzeit des Radarsignals auch dessen Abstand bestimmt werden.

Die verbleibenden Antennen werden über einen Mischer angesteuert, welcher von einem ersten und einen zweiten Betriebszustand umschaltbar ist. Im ersten Betriebszustand arbeitet der umschaltbare Mischer als Transfermischer. Dadurch wird die dem Mischer zugeordnete Antenne wie bereits vorstehend beschrieben als Sende- und Empfangsantenne verwendet. Im zweiten Betriebszustand arbeitet der Mischer hingegen als isolierender Mischer, welcher die Antenne vom Signal des Lokaloszillators isoliert. Dies bewirkt, dass die zugeordnete Antenne einen reinen Empfangspfad konstituiert. Auf diese Weise kann sowohl die Sendeleistung als auch die Abstrahlcharakteristik der Mehrstrahlradarsensorvorrichtung verändert werden. Die Empfangseigenschaften der Mehrstrahlradarsensorvorrichtung bleiben bei einer Änderung der Sendeeigenschaften konstant. Dem Fachmann ist dabei selbstverständlich geläufig, dass auch ein nominal isolierender Mischer möglicherweise eine nicht ideale Isolation aufweist und durch ein überkoppelndes Signal auch eine als reine Empfangsantenne geschaltete Antenne eine Sendeleistung abgeben kann. Dennoch wird diese Sendeleistung geringer sein als die über einen Transfermischer eingekoppelte Sendeleistung und dadurch die Richtcharakteristik der Antenneneinrichtung beeinflusst. Unter einem isolierenden Mischer wird dabei im Zusammenhang mit der vorliegenden Erfindung ein Mischer verstanden, welcher eine Schwächung des Sendesignales um mindestens 10 dB, besonders bevorzugt um mehr als 30 dB erreicht.

Da sich beim Hinzu- und Wegschalten von Sendequellen sowohl die Hauptkeulen als auch die Nebenkeulen verändern, kann durch gegenseitiges Plausibilisieren der Messwerte bei mindestens zwei verschiedenen Richtcharakteristiken der Sendeantennen der Eindeutigkeitsbereich des Sensors erhöht werden. Insbesondere wird der Fachmann die Abstrahlcharakteristik der Antennenanordnung so verändern, dass die Bereiche, in welchen die Messwerte mehrdeutig sind, sich nicht überlappen. Auf diese Weise kann bei zumindest einer Abstrahlcharakteristik ein korrekter Winkel zu jedem Ziel gemessen werden.

In einer Weiterbildung der Erfindung kann vorgesehen sein, den Betriebszustand des zweiten Mischers zyklisch zu verändern. Auf diese Weise kann der gesamte Messbereich der Mehrstrahlradarsensorvorrichtung mit jeder zur Verfügung stehenden Abstrahlcharakteristik fortlaufend erfasst und plausibilisiert werden, ehe Messwerte an den Benutzer oder eine nachgeordnete Regeleinrichtung ausgegeben werden.

Nachfolgend soll die Erfindung anhand von Figuren und Ausführungsbeispielen ohne Beschränkung des allgemeinen Erfindungsgedankens näher erläutert werden. Dabei zeigt:
Figur 1 den beispielhaften Aufbau einer Mehrstrahlradarsensorvorrichtung mit vier Antennen.
Figur 2 zeigt die Richtcharakteristik der in Figur 1 dargestellten Mehrstrahlradarsensorvorrichtung in einem ersten Betriebszustand.
Figur 3 zeigt die Richtcharakteristik der in Figur 1 dargestellten Mehrstrahlradarsensorvorrichtung in einem zweiten Betriebszustand.
Figur 4 zeigt die Entstehung von Mehrfachechos durch ein einziges Ziel.
Figur 5 erläutert die Erfassung der in Figur 4 dargestellten Situation in einem ersten Betriebszustand der Mehrstrahlradarsensorvorrichtung.
Figur 6 erläutert die Erfassung der in Figur 4 dargestellten Situation in einem zweiten Betriebszustand der Mehrstrahlradarsensorvorrichtung.

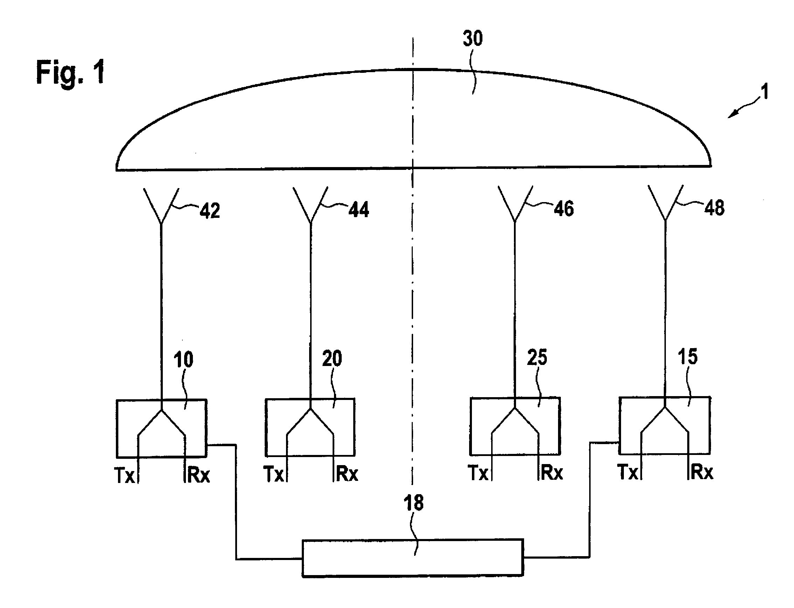

Figur 1 zeigt eine Ausführungsform der erfindungsgemäß vorgeschlagenen Mehrstrahlradarsensorvorrichtung. Das Ausführungsbeispiel gemäß Figur 1 verwendet vier Antennen 42, 44, 46, 48. Die Mehrstrahlradarsensorvorrichtung 1 verwendet dabei ein monostatisches Antennenkonzept, d.h. ein und dieselbe Antenne kann sowohl zum Senden des Radarsignals als auch für den Empfang des Radarechos eingesetzt werden. Hierzu wird jeder Antenne 42, 44, 46, 48 ein Signal eines Lokaloszillators über einen Mischer 10, 20, 25, 15 zugeführt bzw. im Empfangsmodus abgeleitet.

Das Ausführungsbeispiel gemäß Figur 1 zeigt eine Mehrstrahlradarsensorvorrichtung 1 mit vier linear angeordneten Antennen 42, 44, 46, 48. Selbstverständlich können die Antennen auch in einer anderen Geometrie angeordnet sein oder es kann eine größere oder eine geringere Anzahl von Antennen eingesetzt werden.

Die Mischer 20 und 25 sind in der dargestellten Ausführungsform als Transfermischer ausgebildet. Den Transfermischern wird über einen Eingang Tx eine elektrische Leistung aus einem Lokaloszillator zugeführt. Die dem Mischer 20 zugeführte Leistung wird dann zumindest teilweise an die Antenne 44 weitergeleitet und führt dort zum Aussenden eines Radarstrahls bzw. einer Radarstrahlkeule. In gleicher Weise wird die dem Transfermischer 25 zugeführte elektrische Leistung zumindest teilweise an die Antenne 46 weitergeleitet und führt dort zur Aussendung eines Radarstrahls.

Beim Empfang eines Radarechos durch eine der Antennen 44 oder 46 wird das von der Antenne empfangene Signal dem Transfermischer 20 bzw. 25 zugeführt. Die Transfermischer 20 bzw. 25 mischen das empfangene Signal mit dem vom Lokaloszillator zugeführten Signal und stellen am Ausgang Rx ein Zwischenfrequenzsignal bereit, welches Informationen über die bei der Reflektion des gesendeten Signals am Radarziel eingetretene Dopplerverschiebung.

Im Gegensatz dazu sind die Antennen 42 und 48 jeweils mit einem Mischer 10 bzw. 15 verbunden, welcher von einem ersten in einen zweiten Betriebszustand umschaltbar ist. Dabei arbeiten die umschaltbaren Mischer 10 und 15 im ersten Betriebszustand als Transfermischer, wie in Zusammenhang mit den Mischern 20 und 25 beschrieben.

Im zweiten Betriebszustand der Mischer 10 bzw. 15 arbeiten diese zumindest annähernd isolierend als Empfangsmischer. Dies bedeutet, dass die am Eingang Tx der Mischer 10, 15 zugeführte elektrische Leistung eines Lokaloszillators nicht an die zugeordneten Antennen 42 und 48 weitergeleitet wird. Umgekehrt wird jedoch ein von der Antenne 42 empfangenes Radarsignal im Mischer 10 mit dem im Lokaloszillator erzeugten Signal gemischt, so dass am Ausgang Rx wiederum ein Zwischenfrequenzsignal zur Verfügung steht, aus welchem die bei der Reflektion am Radarziel eingetretene Dopplerverschiebung bestimmt werden kann. In gleicher Weise wird am Ausgang Rx des Mischers 15 ein Zwischenfrequenzsignal bereitgestellt, welches aus dem Empfangssignal der Antenne 48 erzeugt wurde.

Dem Fachmann ist selbstverständlich geläufig, dass die Mischer 10 und 15 im zweiten Betriebszustand eine nicht ideale Isolation zwischen dem Eingang Tx des Lokaloszillatorsignals und dem zugeordneten Antennenausgang aufweisen können. Somit kann auch im zweiten Betriebszustand eine reduzierte Sendeleistung über die Antennen 42 und 48 abgegeben werden.

Durch das Umschalten der Mischer 10 und 15 vom ersten Betriebszustand in den zweiten Betriebszustand wird somit die Sendeleistung der Antennen 42 und 48 beeinflusst. Hierdurch verändert sich die Winkelverteilung der von der Mehrstrahlradarsensorvorrichtung 1 ausgesandten Radarstrahlung und infolgedessen auch die Erkennungswahrscheinlichkeit bzw. die Signalintensität unter verschiedenen Empfangswinkeln. Durch zyklisches Umschalten der Mischer 10 und 15 mittels einer Schalteinrichtung 18 kann somit das empfangene Signal fortlaufend plausibilisiert werden, um auf diese Weise Fehlechos von Radarzielen außerhalb des eigentlichen Sichtbereiches der Mehrstrahlradarsensorvorrichtung 1 oder Mehrfachreflektion eines einzelnen Radarzieles zu erkennen.

Im dargestellten Ausführungsbeispiel weist die Mehrstrahlradarsensorvorrichtung 1 weiterhin eine Linse 30 auf, um den von der Mehrstrahlradarsensorvorrichtung 1 überwachten Winkelbereich an einen gewünschten Zielbereich anzupassen. Es ist jedoch darauf hinzuweisen, dass die Linse 30 optional ist und in anderen Ausführungsformen der Erfindung auch entfallen kann.

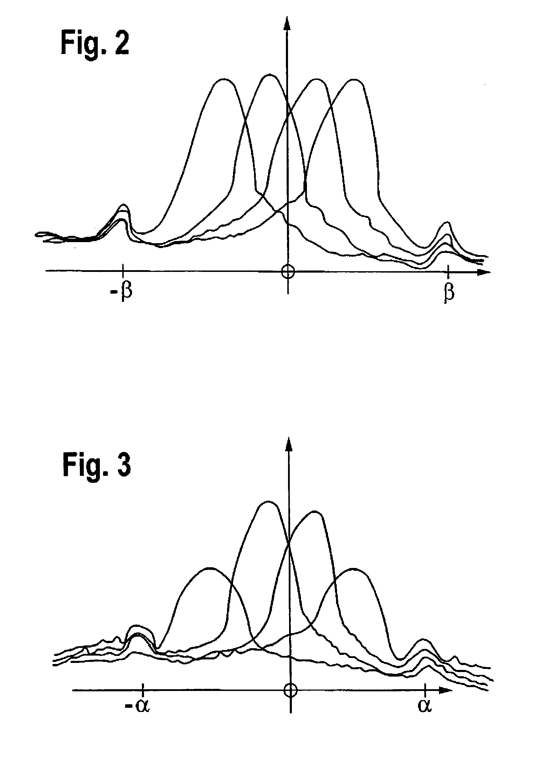

Figur 2 zeigt die Richtcharakteristik der in Figur 1 dargestellten Mehrstrahlradarsensorvorrichtung 1 in einem ersten Betriebszustand. Figur 2 stellt dabei die von jeder Antenne 42, 44, 46, 48 ausgesendete Radarintensität auf der Ordinate und den zugehörigen Abstrahlwinkel auf der Abszisse dar. Die Ordinate gemäß Figur 2 fällt dabei mit der Symmetrieachse der in Figur 1 dargestellten Vorrichtung zusammen.

Im dargestellten Betriebszustand arbeiten die Mischer 10, 20, 15 und 25 als Transfermischer. Dies bedeutet, dass die von den Antennen 42, 44, 46, 48 ausgesendeten Radarleistungen in etwa identisch sind. Daher zeigt das Diagramm in Figur 2 vier etwa gleich hohe Hauptkeulen sowie zwei Nebenkeulen, welche unter den Winkeln β bzw. -β auftreten.

Figur 3 zeigt eine identische Darstellung zu Figur 2, nachdem die Mischer 10 und 15 vom ersten Betriebszustand in den zweiten, isolierenden Betriebszustand umgeschaltet wurden. Figur 3 zeigt dabei, dass die von den Antennen 44 und 46 ausgesendete Intensität nahezu unverändert bleibt, da die Mischer 20 und 25 weiterhin als Transfermischer arbeiten. Aufgrund der nicht idealen Isolation der Mischer 10 und 15 wird von den Antennen 42 und 48 weiterhin eine wenn auch geringere Sendeleistung emittiert. Auf diese Weise wird der ausgeleuchtete Sichtbereich der Mehrstrahl-Radarsensoreinrichtung 1 verkleinert. Da die Mischer 10 und 15 jedoch weiterhin als Empfangsmischer arbeiten, bleiben die Empfangseigenschaften der Mehrstrahlradarsensorvorrichtung 1 unverändert.

Durch das Schalten der Sendeleistung ändern sich nicht nur die Hauptkeulen, sondern auch die Nebenkeulen. Im dargestellten Ausführungsbeispiel treten diese nun unter dem Winkel α bzw. -α auf. Vorteilhafterweise wird die Antennenanordnung so ausgelegt, dass der Winkel α gemäß Fig. 3 vom Winkel β gemäß Fig. 2 verschieden ist. Auf diese Weise kann der Eindeutigkeitsbereich der Mehrstrahlradarsensorvorrichtung erhöht werden. Dem Fachmann ist selbstverständlich geläufig, dass durch das Umschalten weitere Mischer anderer Sendeantennen auch andere Winkelverteilungen der ausgesandten Radarstrahlungen erzeugt werden können. Die Erfindung lehrt nicht das synchrone Schalten der äußeren Sendeantennen als Lösungsprinzip. Weiterhin können erfindungsgemäß auch mehr als zwei unterschiedliche Richtcharakteristiken durch Schalten unterschiedlicher Kombinationen von Mischern erzeugt werden.

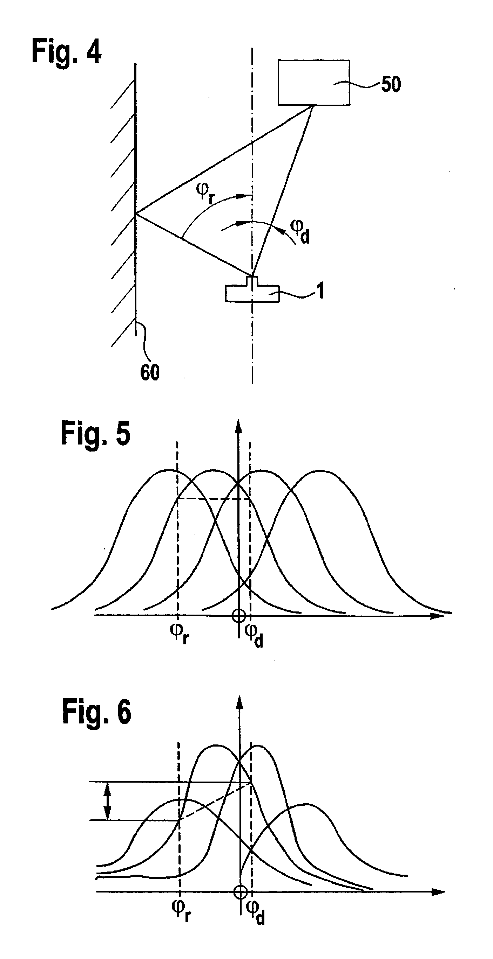

Figur 4 zeigt den Einsatz einer Mehrstrahlradarsensorvorrichtung 1 in einer typischen Verkehrssituation. Vor der Mehrstrahlradarsensorvorrichtung 1 befindet sich unter einem Winkel ■ *_{d}* ein erfassbares Radarziel 50, beispielsweise ein vorausfahrendes Fahrzeug. Die Fahrbahn wird dabei linksseitig durch eine Leitplanke oder eine Tunnelwand 60 begrenzt. Auf diese Weise ergibt sich für die Radarstrahlung ein weiterer Reflektionspfad, welcher ausgehend vom Radarziel 50 über die Leitplanke 60 zur Mehrstrahlradarsensorvorrichtung 1 führt. Die Mehrstrahlradarsensorvorrichtung 1 erkennt somit ein scheinbar vorhandenes zweites Radarziel unter dem Winkel ϕ*ᵣ*.

Die bei der Einsatzsituation gemäß Figur 4 erhaltenen Messwerte der Mehrstrahlradarsensorvorrichtung 1 sind in Figur 5 dargestellt. Figur 5 zeigt wiederum die Intensität der Radarstrahlen gegenüber dem Winkel. Auf der Abszisse sind weiterhin die Winkel ϕ*_{d}* und ϕ*ᵣ* eingezeichnet, unter welchen die vermeintlich zwei Radarziele empfangen werden.

In der in Figur 5 dargestellten Situation, in welcher analog zu Figur 2 alle vier Radarantennen im Sendebetrieb arbeiten, ist die Sendeintensität unter beiden Winkeln ϕ*_{d}* und ϕ*ᵣ* gleich groß. Daher erscheinen beide empfangenen Radarechos gleich und die in Figur 4 dargestellte Situation ist nicht eindeutig erkennbar.

Zur Plausibilisierung, welche die Unterscheidung zwischen einem Radarziel 50 mit zwei Reflektionswegen und zwei verschiedenen Radarzielen erlaubt, wird wie in Figur 6 dargestellt die Sendeleistung der äußeren Sendeantennen 42 und 48 abgesenkt. Auf diese Weise verkleinert sich der von der Mehrstrahlradarsensorvorrichtung 1 ausgeleuchtete Sichtbereich, ähnlich wie es ein Teleobjektiv einer optischen Fotokamera ermöglicht. Aufgrund der aus Figur 6 ersichtlichen Intensitätsabschwächung des Radarechos unter dem Winkel ϕ*ᵣ* bei gleichbleibender Signalhöhe des Radarechos unter dem Winkel ϕ*_{d}* kann mittels einer elektronischen Schaltung oder einer Software das unter dem Winkel ϕ*ᵣ* detektierte Echo als Fehlecho bzw. Reflektion erkannt werden.

Dem Fachmann ist selbstverständlich geläufig, dass die Erfindung nicht auf die dargestellten Ausführungsbeispiele beschränkt ist. Vielmehr können bei der Umsetzung der Erfindung Modifikationen und Änderungen vorgenommen werden, ohne die Erfindung an sich wesentlich zu verändern. Die vorstehende Beschreibung ist als daher nicht als beschränkend, sonder als erläuternd anzusehen.

## Patentansprüche

1. Mehrstrahlradarsensorvorrichtung (1) mit zumindest zwei Sende-/Empfangskanälen (42/10, 44/20, 46/25, 48/15), deren Signalpfade jeweils eine Antenne (42, 44, 46, 48) und einen Mischer (10, 15, 20, 25) enthalten, wobei zumindest ein erster Mischer (20, 25) bidirektional als Transfermischer ausgebildet ist,
wobei zumindest ein zweiter Mischer (10, 15) von einem ersten in einen zweiten Betriebszustand umschaltbar ist, wobei der Mischer (10, 15) im ersten Betriebszustand bidirektional als Transfermischer ausgebildet ist und im zweiten Betriebszustand zumindest annähernd isolierend als Empfangsmischer ausgebildet ist,
**dadurch gekennzeichnet,**
**dass** die Vorrichtung ausgebildet ist, Messwerte im ersten und im zweiten Betriebszustand des zweiten Mischers (10, 15) aufzunehmen und zu plausibilisieren.

2. Vorrichtung nach Anspruch 1, enthaltend weiterhin eine Schalteinrichtung (18), mit welcher der Betriebszustand des zweiten Mischers (10, 15) zyklisch zwischen dem ersten Betriebszustand und dem zweiten Betriebszustand schaltbar ist.

3. Vorrichtung nach Anspruch 1 oder 2, **dadurch gekennzeichnet, dass** eine Mehrzahl von Sende-/Empfangskanälen (42/10, 44120, 46/25, 48/15) vorhanden ist, deren Antennen (42, 44, 46, 48) nebeneinander angeordnet sind, und die Mischer (10, 15), deren zugeordnete Antennen (42, 48) außen liegen, zwischen dem ersten Betriebszustand und dem zweiten Betriebszustand schaltbar sind.

4. Kraftfahrzeug mit einer Vorrichtung nach einem der Ansprüche 1 bis 3.

5. Verwendung einer Vorrichtung nach einem der Ansprüche 1 bis 3 in einem Abstandswarn- und Regelsystem.

6. Verfahren zum Bestimmen eines Abstandes und/oder einer Geschwindigkeit eines Zieles mittels einer Mehrstrahlradarsensorvorrichtung (1), bei welchem ein Radarsignal in Richtung des Zieles (50) gesendet und ein reflektiertes Radarecho empfangen wird, wozu zumindest zwei Sende-/Empfangskanäle (42/10, 44/20, 46/25, 48115) verwendet werden, deren Signalpfade jeweils eine Antenne (42, dd 46, 48) und eisen Mischer (10,15, 20, 25) enthalten, wobei zumindest ein erster Mischer (20, 25) bidirektional als Transfermischer betrieben wird und die zugeordnete Antenne (44, 46) sowohl als Sende- als auch als Empfangsantenne verwendet wird,
wobei zumindest ein zweiter Mischer (10, 15) von einem ersten in einen zweiten Betriebszustand umgeschaltet wird, um den Mischer (10, 15) im ersten Betriebszustand bidirektional als Transfermischer und die zugeordnete Antenne (42, 48) sowohl als Sende- als auch als Empfangsantenne zu verwenden und den Mischer (10, 15) im zweiten Betriebszustand zumindest annähernd isolierend als Empfangsmischer und die zugeordnete Antenne (42, 48) im Wesentlichen als Empfangsantenne zu verwenden,
**dadurch gekennzeichnet,**
**dass** Messwerte im ersten und im zweiten Betriebszustand des zweiten Mischers (10, 15) aufgenommen und plausibilisiert werden.

7. Verfahren nach Anspruch 6, **dadurch gekennzeichnet, dass** der Betriebszustand des zweiten Mischers (10, 15) zyklisch zwischen dem ersten Betriebszustand und dem zweiten Betriebszustand geschaltet wird.

8. Verfahren nach Anspruch 6 oder 7, **dadurch gekennzeichnet, dass** eine Mehrzahl von Sende-/Empfangskanälen (42/10, 44/20, 46/25, 48/15) vorhanden ist, deren Antennen (42, 44, 46, 48) nebeneinander angeordnet sind, und die Mischer (10, 15), deren zugeordnete Antennen (42, 48) außen liegen, zwischen dem ersten Betriebszustand und dem zweiten Betriebszustand geschaltet werden.

## Claims

1. Multibeam radar sensor apparatus (1) having at least two transmission/reception channels (42/10, 44/20, 46/25, 48/15), the signal paths of which each contain an antenna (42, 44, 46, 48) and a mixer (10, 15, 20, 25), wherein at least one first mixer (20, 25) is in bidirectional form as a transfer mixer,
wherein at least one second mixer (10, 15) can be changed over from a first to a second operating condition, wherein the mixer (10, 15) is in bidirectional form as a transfer mixer in the first operating condition and is in at least approximately insulating form as a reception mixer in the second operating condition,
**characterized**
**in that** the apparatus is designed to pick up and plausibilize measured values in the first and second operating conditions of the second mixer (10, 15).

2. Apparatus according to Claim 1, also containing a switching device (18) which can be used to switch the operating condition of the second mixer (10, 15) cyclically between the first operating condition and the second operating condition.

3. Apparatus according to Claim 1 or 2, **characterized in that** a plurality of transmission/reception channels (42/10, 44/20, 46/25, 48/15) are present, the antennas (42, 44, 46, 48) of which are arranged next to one another, and the mixers (10, 15), the associated antennas (42, 48) of which are situated externally, can be switched between the first operating condition and the second operation condition.

4. Motor vehicle having an apparatus according to one of Claims 1 to 3.

5. Use of an apparatus according to one of Claims 1 to 3 in a distance warning and control system.

6. Method for determining a distance and/or speed of a target by using a multibeam radar sensor apparatus (1), in which a radar signal is sent in the direction of the target (50) and a reflected radar echo is received, to which end at least two transmission/reception channels (42/10, 44/20, 46/25, 48/15) are used, the signal paths of which each contain an antenna (42, 44, 46, 48) and a mixer (10, 15, 20, 25), wherein at least one first mixer (20, 25) is operated bidirectionally as a transfer mixer and the associated antenna (44, 46) is used both as a transmission antenna and as a reception antenna, wherein at least one second mixer (10, 15) is changed over from a first to a second operating condition in order to use the mixer (10, 15) bidirectionally as a transfer mixer in the first operating condition and to use the associated antenna (42, 48) both as a transmission antenna and as a reception antenna and to use the mixer (10, 15) in at least approximately insulating form as a reception mixer in the second operating condition and to use the associated antenna (42, 48) essentially as a reception antenna,
**characterized**
**in that** measured values are picked up and plausibilized in the first and second operating conditions of the second mixer (10, 15).

7. Method according to Claim 6, **characterized in that** the operating condition of the second mixer (10, 15) is switched cyclically between the first operating condition and the second operating condition.

8. Method according to Claim 6 or 7, **characterized in that** a plurality of transmission/reception channels (42/10, 44/20, 46/25, 48/15) are present, the antennas of which (42, 44, 46, 48) are arranged next to one another, and the mixers (10, 15), the associated antennas (42, 48) of which are situated externally, are switched between the first operating condition and the second operating condition.

## Revendications

1. Dispositif de détection radar multifaisceaux (1) doté d'au moins deux canaux d'émission/réception (42/10, 44/20, 46/25, 48/15) dont les trajets de signal contiennent respectivement une antenne (42, 44, 46, 48) et un mélangeur (10, 15, 20, 25), au moins un premier mélangeur (20, 25) prenant une forme bidirectionnelle sous la forme d'un mélangeur de transfert ;
au moins un deuxième mélangeur (10, 15) pouvant être commuté d'un premier dans un deuxième état de fonctionnement, le mélangeur (10, 15) prenant une forme bidirectionnelle dans le premier état de fonctionnement sous la forme d'un mélangeur de transfert et prenant au moins approximativement une forme isolante dans le deuxième état de fonctionnement sous la forme d'un mélangeur de réception ;
**caractérisé en ce que** le dispositif est réalisé pour collecter des valeurs de mesure dans le premier et dans le deuxième état de fonctionnement du deuxième mélangeur (10, 15) et pour en évaluer la plausibilité.

2. Dispositif selon la revendication 1, contenant en outre un dispositif de commutation (18) à l'aide duquel l'état de fonctionnement du deuxième mélangeur (10, 15) peut être commuté cycliquement entre le premier état de fonctionnement et le deuxième état de fonctionnement.

3. Dispositif selon la revendication 1 ou 2, **caractérisé en ce qu'**une pluralité de canaux d'émission/réception (42/10, 44/20, 46/25, 48/15) est présente dont les antennes (42, 44, 46, 48) sont disposées côte à côte et que les mélangeurs (10, 15) dont les antennes (42, 48) associées reposent à l'extérieur peuvent être commutés entre le premier état de fonctionnement et le deuxième état de fonctionnement.

4. Véhicule automobile équipé d'un dispositif selon l'une quelconque des revendications 1 à 3.

5. Utilisation d'un dispositif selon l'une quelconque des revendications 1 à 3 dans un système d'avertissement et de réglage de distance.

6. Procédé de détermination d'une distance et/ou d'une vitesse d'une cible à l'aide d'un dispositif de détection radar multifaisceaux (1), dans lequel un signal radar est envoyé en direction de la cible (50) et dans lequel un écho radar réfléchi est reçu, au moins deux canaux d'émission/réception (42/10, 44/20, 46/25, 48/15) étant utilisés à cette fin, les trajets de signal desdits canaux contenant respectivement une antenne (42, 44, 46, 48) et un mélangeur (10, 15, 20, 25), au moins un premier mélangeur (20, 25) étant entraîné bidirectionnellement sous la forme d'un mélangeur de transfert et l'antenne (44, 46) associée servant tant d'antenne émettrice que réceptrice ;
au moins un deuxième mélangeur (10, 15) étant commuté d'un premier dans un deuxième état de fonctionnement afin d'utiliser le mélangeur (10, 15) dans le premier état de fonctionnement bidirectionnellement sous la forme d'un mélangeur de transfert et d'utiliser l'antenne (42, 48) associée tant comme antenne émettrice que réceptrice et afin d'utiliser le mélangeur (10, 15) dans le deuxième état de fonctionnement au moins approximativement de façon isolante sous la forme d'un mélangeur de réception et d'utiliser l'antenne (42, 48) associée pour l'essentiel comme antenne réceptrice ;
**caractérisé en ce que** :
les valeurs de mesure sont recueillies dans le premier et dans le deuxième état de fonctionnement du deuxième mélangeur (10, 15) et leur plausibilité est évaluée.

7. Procédé selon la revendication 6, **caractérisé en ce que** l'état de fonctionnement du deuxième mélangeur (10, 15) est commuté cycliquement entre le premier état de fonctionnement et le deuxième état de fonctionnement.

8. Procédé selon la revendication 6 ou 7, **caractérisé en ce qu'**une pluralité de canaux d'émission/réception (42/10, 44/20, 46/25, 48/15) est présente dont les antennes (42, 44, 46, 48) sont disposées côte à côte et que les mélangeurs (10, 15) dont les antennes (42, 48) associées se placent à l'extérieur sont commutés entre le premier état de fonctionnement et le deuxième état de fonctionnement.
